# EUROPEAN PATENT SPECIFICATION

(11) **EP 1 704 780 B1**
(45) Date of publication and mention of the grant of the patent: **30.01.2008**
(21) Application number: 04805091.8
(22) Date of filing: 07.12.2004
(51) Int. Cl.: A23B 4/023, A23B 4/005, A23B 4/06, A23B 4/015

(54) **METHOD FOR THE TREATMENT AND LONG-TERM PRESERVATION OF MEAT PRODUCTS WITHOUT A COLD CHAIN**
VERFAHREN ZUR BEHANDLUNG UND LANGZEITKONSERVIERUNG VON FLEISCHPRODUKTEN OHNE KÜHLKETTE
PROCEDE DE CONDITIONNEMENT ET DE CONSERVATION LONGUE DUREE DE PRODUITS CARNES SANS TRAITEMENT PAR LA CHAINE DU FROID

(30) Priority: 05.12.2003 AR 0304507
(43) Date of publication of application: 27.09.2006
(73) Proprietor: Curutchet Ferreira, Pablo R., Barcelona 08013 (ES); Inta Instituto Nacional de Tecnologia a Agropecuaria, Buenos Aires 1033 (AR)
(72) Inventor: CURUTCHET FERREIRA, Pablo Román, E-08013 BARCELONA (ES); MASANA RINERO, Marcelo, BUENOS AIRES, 1033 (AR); VAUDAGNA BARBERO, Sergio, BUENOS AIRES, 1033 (AR); SANCHEZ DANGUISE, Guillermo, BUENOS AIRES, 1033 (AR)
(74) Representative: Manresa Val, Manuel
(86) International application number: PCT/ES2004/000548
(87) International publication number: WO 2005/055732

(56) References cited:
- EP-A1- 0 683 986
- GB-A- 2 288 308

## Description

The present invention relates to a process for conditioning and conservation of meat products for long periods of time and without the need of a cold chain system.

More particularly, the present invention encircles the steps of a process for permitting the conditioning and preservation of meat cuts for their transportation and storage for a determined period of time without the need of providing a cold chain for their conservation.

### Prior Art of this Invention

Since long time ago it is well known that any meat piece or cut of meat is submerged into a saturated saline solution and then permitted to dry for "curing" the same for obtaining a solid product, with disagreeable appearance, but capable of being conserved for a long time without decomposition, even when their nutritional and organoleptic properties are poor and deficient.

Since about the 50's and 60's the development of frigorific installations permitted to freeze and transport the meat pieces in refrigerated wagons for then maintaining the meat in cooling chambers either to further maritime transportation or terrestrial transportation in big cities for final selling. This procedure is known as "cold chain" and it operates very well always and when the cold chain is not interrupted.

There are places, however, where these installations are not provided either because they are not cost effective or because of technological and equipment deficiencies, for example in some countries in the world.

These technology and equipment deficiencies prevent the supplying of large volumes of meat products because even if these meat pieces are transported in refrigerated ships the product can not be preserved in destination because of the lack of such installations.

The above commented problem is a bar for entering and capturing new and non traditional markets with the result of loosing business opportunities.

There are other more primitive methods for curing the meat but all of them, put in practice since ancient times, consist of drying the meat under the protection of nitrites and concentrated ClNa, or consist of smoking the meat, etc. but none of these known methods results in a soft meat ready for consumption or cooking, such as a piece of meat just processed, tender and soft and with most of their natural fluids.

While other processes, such as the one for obtaining corned beef, do not need of cold chain for conservation purposes they need of hermetic tin cans for a correct conditioning and conservation, which processes and components are very costly.

The closest prior art refers to the methods of manufacturing of meat products with improved characteristics. But all these documents refer to storage stability based on "refregiration".

The Patent n. EP A1-0 683 986 disclose a process for manufacturing cooked ham with an improved cooking yield without hegatively affecting the texture. The process comprises trimming and cutting pig muscles into pieces, treating said pieces with a high hydrostatic pressure, injecting brine into the pressure treated pieces of pig muscles, tumbling, filling, cooking and cooling them. The cooked ham may then be stored at refrigeration temperatures of from 2 to 8 C.

According to the invention of the Patent n. GB-A-2 288 308, there is provided a process for producing a cooked composite ham. At a sorting station raw meat pieces comprising silverside, topside and knuckle pieces are sorted into bins. The bins are delivered to a curing station at which a brine solution is injected into each meat piece. The meat pieces are then massaged in a massaging drum and subsequently removed and stored at 3 - 6 DEG C in bins for 24 - 48 hours. The meat pieces are then massaged a second time prior to delivery to a trimming station at which waste material is removed from the meat pieces. Downstream of the trimming station the meat pieces are assembled into a composite ham at a forming station. Netting is drawn about the composite ham which is then inserted into a cooking bag from which air is evacuated prior to sealing the bag. The hams are then cooked. After cooking, the hams are cooled and then removed from the cooking bags at a stripping station and then vacuum packed. Any suitable labelling can then be applied to an exterior of the bag and a number of the hams can be packaged in boxes and delivered to a chill room awaiting distribution.

In the document M.H.F. Spoto et al., Sci. Agric. Vol. 57 n.3 Piracicaba July/Sept. 2000 there is evaluated the effect of gamma raditation on reducting the population of *Staphylococcus aureus, Escherichia coli* and *Salmonella typhimurium* in ground chicken breast stored under refrigiration.

### Object of the Invention:

It is an object of the present invention to provide a process for conditioning meat cuts and for conserving the same in apt conditions for consumption for up to 8 months without the need of a cold chain, with the meat being capable of being conserved under temperatures of up to 30°C without spoilage.

It is another object of the present invention to provide the conditioning of meat cuts or pieces in containers or packages made of recycled and low cost materials, such as plastic bags, cardboard boxes, or a combination thereof, either for transportation as well as for storage and conservation, without the product being spoiled.

It is also an object of the present invention to provide a process for conserving, without deterioration, meat pieces apt for consumption for up to 8 months, without loosing the meat organoleptic characteristics, that is maintaining the meat cuts soft, tender and with most of the natural fluids in intact conditions, as well as with agreeable colour and taste.

Finally, it is an object of the present invention to take advantage of second-selection meat cuts and to obtain a product with excellent characteristics for consumption, which second-selection cuts are generally not considered for traditional processes of conservation under cold chain for exportation purposes.

### Description of the Present Invention:

It is a process for conditioning and conservation of meat products for long periods of time, without the need of a cold chain, including the steps of selecting and cutting meat into meat cuts or pieces, cutting up the meat pieces, if necessary, for removing fat and minor portions or waste cuttings thereof, to obtain pieces having a size and weight within a uniform range, the process being characterized by the following steps:
a) each piece of meat was injected with a brine solution containing NaCl in at least a concentration to reach a maximum of 20% of the weight of the injected piece of meat;
b) once all the pieces of meat within a batch have been injected the meat is massaged for a period of time of within 8 to 24 hours under reduced pressure and temperature;
c) removing the batch from the massage machine and introducing each piece of meat into a sealed bag made of an impervious polymer, and subjecting the bagged meat to a cooking process in hot water until reaching a temperature of 70°c to 85°C measured in the core of the biggest piece of meat for a time of 15 to 30 minutes;
d) removing the bags with the meat from the cooking water, removing the meat from each bag and cooling the meat until reaching a temperature of about 26°C measured in the geometrical center of the pieces of meat;
e) once the cooling step has finished each pre-cooked piece of meat is packaged;
f) once the pieces of meat have been packaged the same are subject to a freezing process at a temperature of about -14°C;
g) the pieces of meat thus packaged are subject to an irradiation process until cumulating a minimum total dose of 15kGy.

It is to be remarked that in step e) the pieces of meat may be packaged into bags made of the material "BTECIN" of the firm Sealed Air Co. Argentina, or in any other packaging for the same purpose, and then the bags are packaged in cardboard boxes.

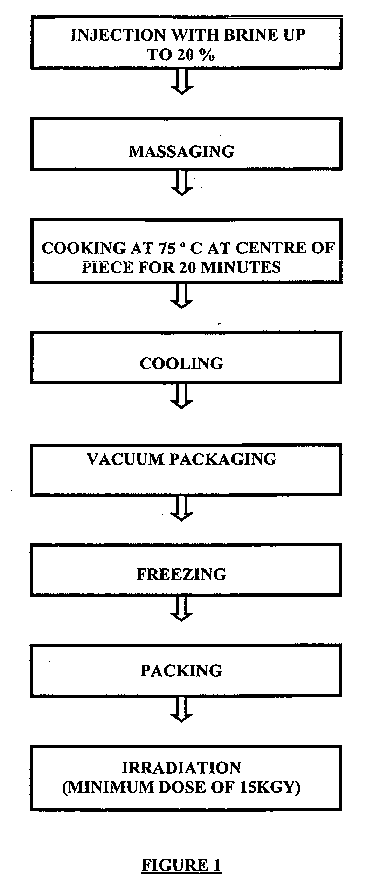

In order to illustrate a better practical form of carrying out the above discolosed steps Figure 1 shows a blocks diagram indicating the main operations, also for supporting an example of each of such steps, with the proviso that such steps correspond to just an example carried out under conditions in a laboratory therefore it must be understood that such conditions may vary when the process is carried out in industrial scale.

### Raw Material Employed in the Process:

For each test 40 Kg of meat were cut into pieces of 10 Kg. and each bag contained a cut of "paleta" namely cut up pieces selected from supra-spinal muscles, infra-spinal muscles, trapezium muscle, deltoids, wide dorsal muscle, triceps brachial, fascia tensor and ante-brachial. Minor portions and fat were eliminated. Each cut was weighted by separate for each bag and the minor portions and fat were removed.

### Injection:

The formulation of the injection solution was defined by determining the concentrations of nitrite and sodium chloride necessary to reach, in the processed product, a concentration of 3.5% CINa/100g of cooked product and an amount not exceeding the 150 ppm of sodium nitrite in the cooked product, this corresponding to about 20%/w of the non processed piece or cut of meat.

An injecting machine having only one needle Dick Lokespritze Esslingen A. NX. was employed.

### Massaging:

Massaging is necessary to obtain a correct uniform distribution of the injected brine solution in all the piece of meat under treatment

A massaging drum or barrel "KOCH", having a maximum capacity of 90 Kg. and a rotation rate of 0 to 9 r.p.m. was employed. The 40 Kg. of pieces of meat were introduced into the drum and a vacuum of 15" HG was produced, with the drum operating at 5 r.p.m. under refrigeration at -1 °C.

Two massaging tests were carried out, one of them for 8 hours and the other one for 24 hours.

### Cooking:

The cooking step was determined for reaching a temperature of 75°C in the center of the pieces of meat for a cooking time of 20 minutes. To that purpose an autoclave "MICROFLOW" was employed, with water showers to simulate a cooking into a water bath. Before this cooking each piece of meat was sealed into a bag made of high density polyethylene from the firm CT Plast. The treatment water was initially at a temperature of 80°C and was kept at this temperature until the biggest piece of meat reached the mentioned temperature of 75°C and counted from this moment the cooking was maintained for 20 minutes.

### Cooling:

Once the cooking was finished each piece of meat was cooled down at a temperature of about 26°C.

### Packaging under Vacuum:

Once the cooling down was finished each piece of meat was packaged under vacuum into bags such as the bags "BTECIN" from the firm Sealed Air Co, from Argentina.

### Packaging:

Cardboard boxes having 40 cm wide, 60 cm long and 16 cm high were employed and 6 pieces of meat were packaged into each one of these boxes. This step may be carried out as indicated or after the following freezing step.

### Freezing:

Once cooled down and packaged the pieces of meat were frozen to -14°C, either packaged in the plastic bags or with the bags packaged into the cardboard boxes.

### Irradiation:

The boxes were subject to gamma-ray irradiation in the Centro Atómico de Ezeiza, Argentina, to cumulate a minimum dose of 15 kGY.

The following results tables, made by the INTA and signed in February 2003 in the "Centro de Investigación de Agroindustria de Moron, Province of Buenos Aires, shows the benefits of the process of the present invention and how the objects are achieved.

### Concentrations of Salts in Solution:

ClNa (%): 18.96%
NO2Na (g/kg): 0.9 g/kg.
Note: Continuous massaging for 8 hours

| BAG PERFORMANCE | | | | | |
|---|---|---|---|---|---|
| BAG NUMBER | BAG: NOMINAL WEIGHT g | BAG: TOTAL WEIGHT g | PREOCESSED MEAT % | WASTE CUTS % | FAT % |
| 1 | 11300.00 | 11300.00 | 63.78 | 22.89 | 13.33 |
| 2 | 10500.00 | 10480.20 | 60.16 | 31.87 | 7.97 |
| 3 | 8850.00 | 8736.30 | 60.96 | 26.21 | 12.83 |
| 4 | 11600.00 | 11473.40 | 66.75 | 27.03 | 6.22 |
| 5 | 10450.00 | 10358.50 | 60.53 | 30.71 | 8.76 |
| 6 | 10700.00 | 10700.00 | 64.68 | 30.77 | 4.55 |

| Weight Variation of Each Meat Piece During the Process | | | | | | | |
|---|---|---|---|---|---|---|---|
| Sample Number | Type of Meat Cut | Initial Weight, in gr | Level of Real Injection , in % | Variation with the beginning of massaging, in % | Variation in massage and bum, in % | Variation in Cooking, in %; | Total Variation, in % |
| 1 | Paleta | 3427.30 | 19.82 | 17.49 | -1.41 | -30.38 | -14.30 |
| 2 | Chingolo | 1444.70 | 19.84 | 16.77 | -1.21 | -39.36 | -23.70 |
| 3 | Marucha | 2334.90 | 20.57 | 17.39 | -0.62 | -27.67 | -10.90 |
| 4 | Paleta | 2971.50 | 20.39 | 18.12 | -1.38 | -23.60 | -6.86 |
| 5 | Chingolo | 1281.40 | 21.09 | 17.19 | -2.30 | -36.87 | -21.98 |
| 6 | Marucha | 2052.30 | 20.42 | 17.02 | -2.04 | -25.16 | -10.18 |
| 14 | Chingolo | 1226.40 | 20.88 | 18.16 | -2.35 | -30.99 | -15.18 |

| Yields related to the raw matter subject to the process | | | | |
|---|---|---|---|---|
| Sample Number | Bag Number | Meat Cut | Individual Yield % | Global Yield % |
| 1 | 1 | Paleta | 85.70 | 84.92 |
| 2 | | Chingolo | 76.30 | |
| 3 | | Marucha | 89.10 | |
| 4 | 2 | Paleta | 93.14 | 88.99 |
| 5 | | Chingolo | 78.02 | |
| 6 | | Marucha | 89.82 | |
| 14 | | Chingolo | 84.82 | |

### Concentration of Salts in Solution:

CINa (%): 18.96%
NO2Na (g/kg): 0.9 g/kg.
Note: Continuous massaging for 24 hours

| BAG PERFORMANCE | | | | | |
|---|---|---|---|---|---|
| BAG NUMBER | BAG: NOMINAL WEIGHT g | BAG: TOTAL WEIGHT g | PREOCESSED MEAT % | WASTE CUTS % | FAT % |
| 7 | 10600.00 | 10544.30 | 61.87 | 32.87 | 5.27 |
| 8 | 10450.00 | 10414.90 | 65.55 | 28.17 | 6.29 |
| 9 | 8100.00 | 8052.80 | 59.04 | 32.24 | 8.72 |
| 10 | 7400.00 | 7331.60 | 60.80 | 29.77 | 9.43 |
| 11 | 11200.00 | 11143.30 | 59.71 | 28.06 | 12.23 |
| 12 | 8550.00 | 8504.30 | 67.55 | 23.35 | 9.10 |

| Weight Variation of Each Meat Piece During the Process | | | | | | | |
|---|---|---|---|---|---|---|---|
| Sample Number | Type of Meat Cut | Initial Weight, in gr | Level of Real Injection , in % | Variation with the beginning of massaging, in % | Variation in massage and burn, in % | Variation in Cooking, in %; | Total Variation , in % |
| 19 | Paleta | 3127.30 | 20.84 | 18.28 | -1.48 | -29.96 | -13.16 |
| 20 | Chingolo | 1362.00 | 21.70 | 19.45 | -2.02 | -42.22 | -24.79 |
| 21 | Marucha | 2034.30 | 21.38 | 18.42 | -1.46 | -28.44 | -11.48 |
| 22 | Paleta | 3290.50 | 21.25 | 20.21 | -2.38 | -29.87 | -12.05 |
| 23 | Chingolo | 1337.00 | 21.89 | 21.19 | -3.85 | -43.49 | -26.16 |
| 24 | Marucha | 2199.10 | 21.15 | 19.22 | -1.60 | -29.78 | -12.15 |
| | | | | | | | |

| Yields related to the raw matter subject to the process | | | | |
|---|---|---|---|---|
| Sample Number | Bag Number | Meat Cut | Individual Yield % | Global Yield % |
| 19 | 7 | Paleta | 86.84 | 84.93 |
| 20 | | Chingolo | 75.21 | |
| 21 | | Marucha | 88.52 | |
| 22 | 8 | Paleta | 87.95 | 85.16 |
| 23 | | Chingolo | 73.84 | |
| 24 | | Marucha | 87.85 | |

## Claims

1. A process for conditioning and conservation of meat products for long periods of time, without the need of a cold chain, including the steps of selecting and cutting meat into meat cuts or pieces, cutting up the meat pieces, if necessary, for removing fat and minor portions thereof, to obtain pieces having a size and weight within a uniform range, the process being **characterized by** the following steps:
a) Injecting each piece of meat with a brine solution containing NaCl in at least a concentration to reach a maximum of 20% of the weight of the injected piece of meat;
b) Once all the pieces of meat within a batch have been injected the meat is massaged for a period of time of within 8 to 24 hours under a reduced pressure of between 10 and 15" HG and a reduced temperature of between 0°C and 3°C;
c) Removing the batch from the massage machine and introducing each piece of meat into a sealed bag made of an impervious polymer, and subjecting the bagged meat to a cooking process in hot water until reaching a temperature of 70°c to 85°C measured in the core of the biggest piece of meat for a time of 15 to 30 minutes;
d) Removing the bags with the meat from the cooking water, removing the meat from each bag and cooling the meat until reaching a temperature of about 26°C measured in the geometrical center of the pieces of meat;
e) Once the cooling step has finished, packaging each pre-cooked piece of meat in other bags apt for vacuum packaging;
f) Freezing the pieces of meat already conditioned to a temperature of about -14°C;
g) Subjecting the already packaged and frozen pieces of meat to an irradiation process until cumulating a minimum total dose of 15kGy.

2. A process for conditioning and conservation of meat products for long periods of time, without the need of a cold chain, according to claim 1, the process being **characterized in that** the brine solution comprises 1.2 g/kg of sodium nitrite solution and 19.5 % of NaCl.

3. A process for conditioning and conservation of meat products for long periods of time, without the need of a cold chain, according to claim 1, the process being **characterized in that** the massage step is carried out under a reduced pressure of 15" HG at 1°C for 8 hours.

## Patentansprüche

1. Verfahren zur Konditionierung und Konservierung von Fleischprodukten über längere Zeiträume, bei dem man ohne Kühlkette auskommt, wobei das Verfahren folgende Schritte umfasst: Auswahl und Schneiden des Fleischs in Fleischstücke, gegebenenfalls Zerkleinern der Fleischstücke, um Fett sowie kleinere Fettanteile zu entfernen, so dass Fleischstücke mit einer Größe und einem Gewicht innerhalb eines gleichmäßigen Bereichs entstehen, wobei das Verfahren durch folgende Schritte **gekennzeichnet** ist:
a) Behandlung jedes Fleischstücks mit Salzlösung, die NaCl zumindest in solch einer Konzentration enthält, dass maximal 20% des Gewichts des behandelten Fleischstücks erreicht werden;
b) Nach Behandlung aller Fleischstücke eines Ansatzes wird das Fleisch für eine Dauer von 8 bis 24 Stunden bei erniedrigtem Druck zwischen 10 und 15" HG und einer erniedrigten Temperatur zwischen 0°C und 3°C massiert;
c) Entnahme der Fleischstücke aus der Massiermaschine und Überführung jedes Fleischstücks in eine versiegelte Tüte und 15- bis 30-minütiges Kochen der Fleischtüte in heißem Wasser bis zum Erreichen einer im Innern des größten Fleischstücks gemessenen Temperatur zwischen 70°C und 85°C;
d) Entnahme der Tüten mit dem Fleisch aus dem kochenden Wasser, Herausnehmen des Fleischs aus jeder Tüte und Kochen des Fleischs bis zum Erreichen einer in der geometrischen Mitte der Fleischstücke gemessenen Temperatur von etwa 26°C;
e) Nach Beendigung des Kühlschritts Verpackung jedes vorgekochten Fleischstücks in andere Tüten, die für Vakuumverpackung geeignet sind;
f) Einfrieren der bereits auf eine Temperatur von etwa -14°C vorgehühlten Fleischstücke;
g) Bestrahlung der bereits verpackten und eingefrorenen Fleischstücke bis zu einer Mindestgesamtdosis von 15 kGy.

2. Verfahren zur Konditionierung und Konservierung von Fleischprodukten über längere Zeiträume, bei dem man ohne Kühlkette auskommt, nach Anspruch 1, wobei das Verfahren **dadurch gekennzeichnet ist, dass** die Salzlösung 1,2 g/kg Natriumnitritlösung und 19,5% NaCl enthält.

3. Verfahren zur Konditionierung und Konservierung von Fleischprodukten über längere Zeiträume, bei dem man ohne Kühlkette auskommt, nach Anspruch 1, **dadurch gekennzeichnet, dass** der Massierschritt unter einem erniedrigten Druck von 15" HG 8 Stunden lang bei 1 °C erfolgt.

## Revendications

1. Procédé destiné au conditionnement et à la conservation des produits carnés pendant de longues périodes de temps, n'ayant pas besoin de la chaîne du froid, comprenant les phases de sélection et de dépeçage de la viande en pièces ou en morceaux, découpage des morceaux de viande, si nécessaire, pour enlever la graisse et de petites parties afin d'obtenir des morceaux d'une taille et d'un poids compris dans une gamme uniforme, le procédé **se caractérisant par** les étapes suivantes:
a) Injecter chaque morceau de viande d'une solution de saumure contenant du NaCl au moins à une concentration atteignant un maximum de 20% du poids du morceau de viande injecté ;
b) Après l'injection de tous les morceaux de viande d'un lot, la viande est massée pendant une période de temps d'entre 8 et 24 heures sous une pression réduite d'entre 10 et 15" HG et une température réduite d'entre 0 °C et 3 °C ;
c) Sortir le lot de la machine de massage et introduire chaque pièce de viande dans un sachet scellé fabriqué en polymère imperméable, et soumettre la viande en sachet à un procédé de cuisson dans de l'eau chaude jusqu'à atteindre la température d'entre 70 °C et 85 °C mesurée au coeur du morceau de viande le plus grand pendant une période de 15 à 30 minutes ;
d) Retirer de l'eau de cuisson les sachets contenant la viande, retirer la viande de chaque sachet et refroidir la viande jusqu'à atteindre une température d'environ 26 °C mesurée au centre géométrique des morceaux de viande;
e) Une fois terminée l'étape de refroidissement, empaquetage de chaque morceau de viande précuite dans un autre sachet apte pour l'emballage sous vide ;
f) Congeler les morceaux de viande déjà conditionnés jusqu'à une température d'environ -14 °C ;
g) Soumettre les morceaux de viande déjà congelés et empaquetés à un procédé d'irradiation jusqu'à accumuler une dose totale minimum de 15 kGy.

2. Procédé destiné au conditionnement et à la conservation des produits carnés pendant de longues périodes de temps, n'ayant pas besoin de la chaîne du froid, selon la revendication 1, le procédé étant **caractérisé en ce que** la solution de saumure comprend 1,2 g/kg de solution de nitrite de sodium et 19,5 % de NaCl.

3. Procédé destiné au conditionnement et à la conservation des produits carnés pendant de longues périodes de temps, n'ayant pas besoin de la chaîne du froid, selon la revendication 1, le procédé étant **caractérisé en ce que** l'étape de massage a lieu sous une pression réduite de 15" HG à 1 °C pendant une période de 8 heures.
